# EUROPEAN PATENT SPECIFICATION

(11) **EP 2 107 553 B1**
(45) Date of publication and mention of the grant of the patent: **18.05.2011**
(21) Application number: 08006389.4
(22) Date of filing: 31.03.2008
(51) Int. Cl.: G10L 11/02

(54) **Method for determining barge-in**
Verfahren zur Erkennung einer Unterbrechung einer Sprachausgabe
Procédé pour déterminer une intervention

(43) Date of publication of application: 07.10.2009
(73) Proprietor: Harman Becker Automotive Systems GmbH, 76307 Karlsbad (DE)
(72) Inventor: Buck, Markus, 88400 Biberach (DE); Gerl, Franz, 89233 Neu-Ulm (DE); Haulick, Tim, 89143 Blaubeuren (DE); Herbig, Tobias, 89075 Ulm (DE); Schmidt, Gerhard, 89081 Ulm (DE); Schulz, Matthias, 89198 Westerstetten (DE)
(74) Representative: Grünecker, Kinkeldey, Stockmair & Schwanhäusser Anwaltssozietät

(56) References cited:
- US-A- 5 978 763
- ITTYCHERIAH A ET AL: "DETECTING USER SPEECH IN BARGE-IN OVER PROMPTS USING SPEAKER IDENTIFICATION METHODS" 6TH EUROPEAN CONFERENCE ON SPEECH COMMUNICATION AND TECHNOLOGY. EUROSPEECH '99. BUDAPEST, HUNGARY, SEPT. 5 - 9, 1999; [EUROPEAN CONFERENCE ON SPEECH COMMUNICATION AND TECHNOLOGY. (EUROSPEECH)], BONN : ESCA, DE, 5 September 1999 (1999-09-05), pages 327-330, XP001076116

## Description

The invention is directed to a method and an apparatus for determining barge-in in a speech dialog system.

Speech dialog systems are used in different fields in order to allow a user to receive desired information or perform an action in an efficient way. Such a speech dialog may be performed, for example, over a telephone line or directly in communication with a device employing such a speech dialog system. During the speech dialog, a user is prompted by the system via speech prompts to input his or her wishes and any required input information.

In most prior art speech dialog systems, a user may utter his or her input or command only upon completion of a speech prompt output. Any speech activity detector and/or speech recogniser is activated after the output of the speech prompt is finished. In order to recognise speech, a speech recogniser has to determine whether speech activity is present. For this purpose, a segmentation may be performed to determine the beginning and the end of a speech input.

Some speech dialog systems allow a so-called barge-in. In other words, a user does not have to wait for the end of a speech prompt but may respond by a speech input already during output of the speech prompt. In this case, the speech recogniser, particularly the speech activity detecting or segmentation part, has to be active during output of the speech prompt. This allows the user to shorten a speech dialog with the system.

To avoid that during output of a speech prompt the speech prompt output itself is erroneously classified as speech input, different methods have been proposed. US 5,978,763 discloses a voice activity detection using echo return loss to adapt the detection threshold. According to this method, the echo return loss is a measure of the attenuation, i.e. the difference (in decibels) between the outgoing and the reflected signal. A threshold is determined as the difference between the maximum possible power (on a telephone line) and the determined echo return loss.

US 7,062,440 discloses monitoring text-to-speech output to effect control of barge-in. According to this document, the barge-in control is arranged to permit barge-in at any time but only takes notice of barge-in during output by the speech system on the basis of a speech input being recognised in the input channel.

A method for barge-in acknowledgement is disclosed in US 7,162,421. A prompt is attenuated upon detection of a speech. The speech is accepted and the prompt is terminated if the speech corresponds to an allowable response.

US 7,212,969 discloses dynamic generation of the voice interface structure and voice content based upon either or both user-specific controlling function and environmental information.

A further possibility is described in A. Ittycheriah et al., "Detecting User Speech in Barge-in over Prompts Using Speaker Identification Methods", in EUROSPEECH 99, pages 327 - 330. Here, speaker-independent statistical models are provided as Vector Quantization Classifiers for the input signal after echo cancellation, and standard algorithms are applied for speaker verification. The task is to separate speech of the user and background noises under the condition of robust suppression of the prompt signal.

In view of the prior art, it is an object underlying the present invention to provide a method and apparatus for determining barge-in with increased reliability. This problem is solved by a method according to claim 1 and an apparatus according to claim 19.

Accordingly, the invention provides a method for determining barge-in in a speech dialog system, comprising:
determining whether a speech prompt is output by the speech dialog system,
detecting whether speech activity is present in an input signal based on a time-varying sensitivity threshold,
wherein the sensitivity threshold is increased if output of the speech prompt is determined and decreased if no output of a speech prompt is determined.

Thus, both during output of a speech prompt and if no speech prompt is output, in principle, speech activity is detected; in other words, also during a speech prompt output, a speech recognizer is active, although the speech activity detection threshold (i.e., the sensitivity threshold) is increased during this time compared to the case of no speech prompt output.

It surprisingly turned out that using such a time-varying sensitivity threshold being increased during speech prompt output and being decreased if no speech prompt output is present increases the recognition reliability considerably. The sensitivity threshold is a threshold for the speech activity detection. If the sensitivity threshold is high, speech activity in a received input signal is detected in fewer cases compared to a low sensitivity threshold. In other words, it is a measure for the sensitivity with which the presence of speech activity is detected. The detecting step may thus comprise determining a time-varying sensitivity threshold.

Detecting whether speech activity is present may further be based on speaker information.

Thus, additionally, the detection of speech activity may be based on information about a speaker, e.g. using the speech dialog system. Such a criterion allows to reliably adapt the system to the particular circumstances. The speaker information may also be used to determine and/or modify the time-varying sensitivity threshold.

In this way, a reliable detection criterion is obtained and used to determine whether speech activity is present in an input signal or not.

The speech prompt may be output using the loudspeaker of the speech dialog system. The input signal may be received via a microphone of the speech dialog system. The microphone may be part of a microphone array; in this case, a beamformer may be provided so that the input signal is received via the microphone array and the beamformer. Alternatively, the input signal may also be received via telephone line; this may be the case if a user in a vehicle communicates by telephone (via a handsfree system) with an external information system employing a dialog system. In this case, the receiving microphone would not be considered part of the speech dialog system.

The step of detecting speech activity may comprise performing segmentation of the input signal. In this way, speech activity may be detected in a reliable way.

In this case, increasing the sensitivity threshold renders the segmentation more insensitive during output of a speech prompt. Thus, the sensitivity of the segmentation with respect to background noise is reduced during playback of a speech prompt.

The determining step may comprise detecting a speech prompt signal to be output. The speech prompt signal is the signal to be output by a loudspeaker. In particular, the determining step may comprise receiving a loudspeaker output signal or a speech prompt output signal. By directly tapping a loudspeaker signal in this way, it may be determined in a simple and safe way whether a speech prompt is currently output.

The determining step may comprise receiving information from a dialog control on whether speech prompt is output. If the speech recogniser or the speech activity detector (e.g. the segmentation module) receives such information from the dialog control controlling the speech dialog, output of a speech prompt may be determined in a reliable way as well.

The above described methods may further comprise detecting a speaker identity for the input signal. This allows to determine which speaker is using the dialog system. In this way, the step of detecting whether speech activity is present in an input signal may be based on the detected speaker identity. Detecting a speaker identity may comprise determining a probability value or a confidence value with respect to a detected speaker identity. This allows to combine the outcome of this detecting step with other information sources.

The method may comprise modifying the sensitivity threshold based on the detected speaker identity. For example, it may be known that a particular user does not perform any barge-in. In this case, the sensitivity threshold during speech prompt output may be set to a high value compared to the case of a predefined normal threshold value during playback of a speech prompt.

The method may comprise determining a statistical model regarding barge-in for a speaker. The determining of a statistical model may be performed in an adaptive way. For example, starting with a speaker-independent model, an adaptation of the speaker-independent model regarding the barge-in behaviour may be performed so as to obtain a speaker-dependent statistical model. Such a statistical model allows to adapt the sensitivity threshold to the barge-in behaviour of a particular speaker. In other words, the method may comprise modifying the sensitivity threshold based on a statistical model for a speaker regarding barge-in (the identity of the speaker having been detected).

The above described methods may further comprise modifying a speech prompt based on the detected speaker identity.

In other words, a speech dialog may be adapted to a particular user. For example, if it has been determined, e.g. based on a corresponding statistical model, that a particular user always interrupts a particular prompt, the dialog may be modified correspondingly, for example, by replacing this prompt (such as by a shorter version of the prompt) or by omitting the prompt completely.

The detecting step in the above described methods may comprise determining an input signal power density spectrum. This power density spectrum may be used in a reliable way to determine whether speech activity is present. In particular, then, the detecting step may comprise determining a probability value or a confidence value with respect to whether speech activity is present.

In particular, speech activity may be detected if the power density spectrum of the input signal is larger than a predetermined noise signal power spectrum times a predetermined factor. The predetermined noise signal power spectrum may be determined during speech pauses, for example. In this way, speech activity may be considered to be present if the current input signal power density spectrum is larger by the predetermined factor than the noise power density spectrum during a (preceding) speech pause.

The predetermined factor may be a time-varying factor. In particular, the predetermined factor may be set analogously to the case of the sensitivity threshold, e.g. it may by modified based on the same information sources. For example, the factor may be increased if a speech prompt is output and decreased if no speech prompt output is present. Alternatively or additionally, the predetermined factor may be based on a detected speaker identity.

The above described methods may further comprise determining a pitch value for the input signal. The pitch value may be a pitch frequency or a pitch confidence value; in particular, both a pitch frequency and a pitch confidence value may be determined. The pitch confidence value is an indication about the certainty that a voiced sound has been detected. In case of unvoiced signals or in speech pauses, the confidence value is small, e.g. near zero. In case of voiced utterances, the pitch confidence value approaches 1; preferably only in this case, a pitch frequency is evaluated. For example, determining a pitch confidence value may comprise determining an auto-correlation function of the input signal.

The detecting step may comprise comparing the determined pitch value with a predetermined pitch threshold. For example, if the determined pitch value is larger than the predetermined pitch threshold, speech activity may be considered to be present. The detecting step may comprise determining a probability value or a confidence value with respect to whether speech activity is present.

The predetermined pitch threshold may be time-varying and/or speaker-dependent. In particular, the predetermined pitch threshold may be set or modified analogously to the sensitivity threshold or to the predetermined factor mentioned above.

The predetermined pitch threshold may be based on a pitch value of the speech prompt signal. Thus, the above described methods may comprise determining a pitch value, such as a pitch frequency or a pitch confidence value, for the speech prompt signal. In this way, if the determined current pitch value is equal or almost equal to the (corresponding) pitch value of the speech prompt signal to be output by a loudspeaker, no speech activity may be considered to be present. If the current pitch value differs from the pitch value of the speech prompt signal, speech activity may be considered to be present.

More particular, if the determined current pitch confidence value is high (i.e. above a predetermined threshold) for the input signal and for the speech prompt signal, and/or if the pitch frequency of the input signal is equal or almost equal to the pitch frequency of the prompt signal, no speech activity may be considered to be present. If the current pitch frequency of the input signal differs (e.g. by more than a predetermined threshold (which may be given in percent)) from the current pitch frequency of the prompt signal, or if the pitch confidence value for the input signal is high and the pitch confidence value for the prompt signal is low (i.e. below a predetermined threshold), speech activity may be considered to be present.

In the above methods, the detecting step, particularly the time-varying sensitivity threshold (or its determination), may be based on a plurality (two or more) of information sources for a detection criterion. In particular, the detecting step may be based on the outcome of the steps of detecting a speaker identity, determining an input signal power density spectrum and/or determining a pitch value for the input signal. The outcome of each of one or more of these steps may be given as a probability value or a confidence value. Then, the detecting step may comprise combining the outcome of one or more of these steps to obtain a detection criterion for detecting whether speech activity is present. The combining step may use a neural network.

In the previously described methods, the detecting step may not be performed before a predetermined minimum time has passed after starting a speech prompt output. Such a latency time enables adapting the system, for example an echo cancellation module, to the current ambient conditions.

The methods may comprise performing noise reduction on the input signal. In particular, the methods may comprise performing filtering the input signal. Then, feeding the filtered signal to the speech activity detection, e.g. to the segmentation, will lead to an increased recognition reliability.

The methods may further comprise performing an echo cancellation on the input signal. In this way, a speech prompt output signal component being present in the input signal may be compensated for. The echo cancellation may be based on a speech prompt signal to be output.

The methods may further comprise interrupting, stopping or fading out output of a speech prompt if speech activity is detected. In this way, interference or noise components in the input signal may be reduced. Furthermore, a user does not have to drown the speech prompt output anymore.

The invention further provides a computer programme product comprising at least one computer readable medium having computer executable instructions for performing the steps of the above described methods when run on a computer.

In addition, the invention provides an apparatus for determining barge-in in a speech dialog system, comprising:
determining means for determining whether a speech prompt is output by the speech dialog system.
a speech activity detector for detecting whether speech activity is present in an input signal based on a time-varying sensitivity threshold,
wherein the sensitivity threshold is increased if output of a speech prompt is determined and decreased if no output of the speech prompt is determined.

The determining means and the speech activity detector may be configured to perform the above described method steps. For example, the speech activity detector may comprise a segmentation module.

Further features and advantages will be described in the following in the context of the exemplary figures.
- Fig. 1: illustrates schematically an example of the structure of a speech dialog sys- tem; and
- Fig. 2: illustrates schematically an example of a flow diagram of method for deter- mining barge-in.

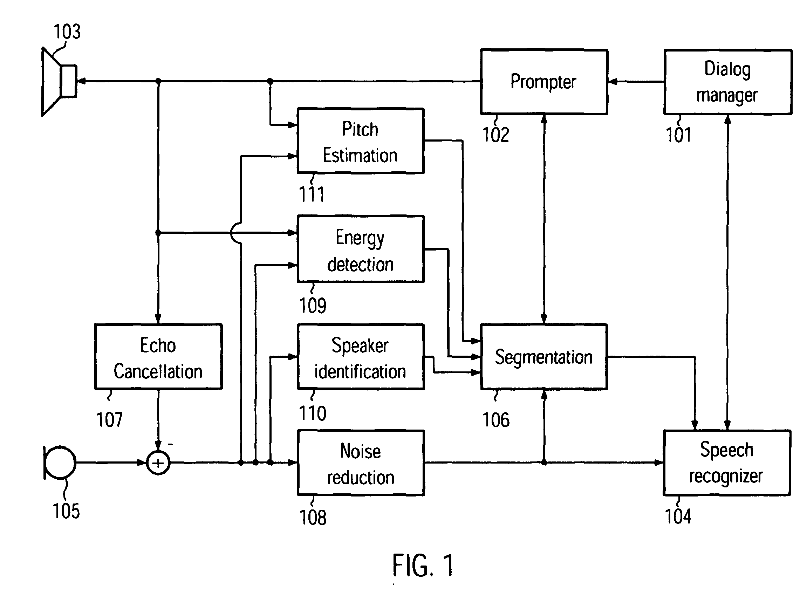

The general structure of a speech dialog system being enabled to deal with barge-in is illustrated schematically in Fig. 1. First of all, the system comprises a dialog manager 101. This dialog manager 101 comprises scripts for one or more dialogs. These scripts may be provided, for example, in VoiceXML.

The speech dialog system in general may be provided as part of a telephone system. In other words, a user may call a server in order to receive information, for example, flight information, via such a speech dialog.

Alternatively, the speech dialog system may be implemented, for example, in a vehicular cabin enabling the user to control devices via speech. For example a hands free telephony system or a multimedia device in a car may be controlled with the help of a speech dialog between the user and the system. The system illustrated in Fig. 1 particularly corresponds to such a situation.

The speech dialog system further comprises a prompter 102 which is responsible for translating the prompts from text to speech and to initiate output of a speech prompt via a loudspeaker 103.

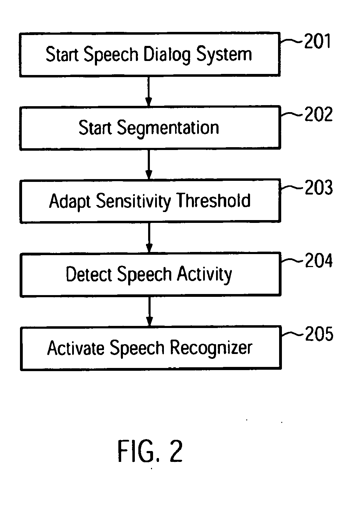

During operation, first of all, the speech dialog system is started as illustrated in step 201 in Fig. 2. The system may be started, for example, by calling a corresponding speech dialog server or by activating a device which may be controlled by a speech command and, then, pressing a push-to-talk key or a push-to-activate key. Upon start or activation of the speech dialog system, the dialog manager loads a corresponding dialog script.

The speech dialog system further comprises a speech recogniser 104 for performing speech recognition on speech input from a user received via microphone 105.

Upon start of the speech dialog system, the speech activity detector 106 is activated as well. The speech activity detector may be provided in form of a segmentation module. This segmentation module is configured to determine the beginning and the end of a speech component in an input signal (microphone signal) received from the microphone 103. A corresponding step 202 is illustrated in Fig. 2. (The microphone may be part of a microphone array; in this case, a beamformer module would be provided as well.)

If occurrence of a speech signal is detected by the segmentation module 106, the speech recogniser 104 is started and processes the utterance in order to determine an input command or any other kind of input information. The determined input is forwarded to the dialog manager which either initiates a corresponding action or continues the dialog based on this speech input.

In order to increase reliability of the speech recogniser, the microphone input signal undergoes an echo cancellation process using echo canceller 107. The echo canceller 107 receives the speech prompt signal to be output via loudspeaker 103. This speech prompt signal may be subtracted from the input signal to reduce any echo components in the input signal. Furthermore, an additional noise reduction component 108 may be provided to remove additional noise components in the input signal, for example, using corresponding filters.

In order to allow the speech dialog system to detect barge-in, the sensitivity threshold of the speech activity detector or the segmentation module has to be set in a suitable way. The information used to set or adapt the sensitivity threshold may stem from different sources. In any case, at the beginning, the sensitivity threshold may be set to a predefined initial value.

Then, the sensitivity threshold may be modified and set depending on whether a speech prompt output currently is present or not. In particular, if a speech prompt is output, the current sensitivity threshold may be increased to avoid that the speech prompt output itself is detected as speech activity in the input signal. The increased sensitivity threshold may be a constant (predefined) value or may be a variable value. For example, the increased sensitivity threshold may further depend on the volume of the speech prompt output and may be chosen to be a higher value in case of high volume and a lower value in case of lower volume.

Determining whether a speech prompt is currently output may be performed in different ways. According to a first alternative, the prompter 102 informs the segmentation module 106 each time outputting of a speech prompt is initiated. In this way, output of a speech prompt may be determined in a simple and reliable way.

According to a second alternative, the reference signal used for the echo cancellation means 107, i.e. the loudspeaker signal, may be fed to an energy detection module 109. In energy detection module 109, the signal level of the loudspeaker signal may be determined. If the signal level exceeds a predetermined threshold, it may be determined that a speech prompt signal is present on the loudspeaker path. Then, a corresponding signal may be forwarded to the segmentation module 106 such that a corresponding adaptation, i.e. an increase, of the sensitivity threshold is performed. As soon as no speech prompt output is present , the sensitivity threshold may again be decreased, e.g. to the initial value.

In addition or alternatively, the sensitivity threshold may be adapted in step 203 based on a speaker identification. For this purpose, the microphone signal is fed to speaker identification module 110. In this module, a speaker is identified such as disclosed, for example, in Kwon et al., "Unsupervised Speaker Indexing Using Generic Models", IEEE Trans. on Speech and Audio Process., Vol. 13, pages 1004-1013 (2005).

In this way, it may be determined which particular speaker (possibly out of a set of known speakers) is using the speech dialog system. In speaker identification module 110, a statistical model may be provided for different speakers with respect to their respective barge-in behaviour. This statistical model may be established, for example, by starting with a speaker-independent model which is then adapted to a particular speaker after each speech input. Possible parameters for the statistical model are the speaker identity, the absolute or relative number that a particular dialog step in a dialog is performed by the speaker, an a priori probability for barge-in in a particular dialog step, the time of the barge-in incident and/or the number of rejected barge-in recognitions.

Via a statistical evaluation of a user behaviour, the sensitivity threshold may be adapted. It is desirable to reduce the number of erroneous detections of speech activity as these lead to an increase of the sensitivity threshold resulting in an increase of misdetections. This effect can be reduced by incorporating in the statistical model the probability for a wrong decision for barge-in that led to abortion of a dialog step. By adapting the sensitivity threshold based on this information, knowledge about the speaker identity and his or her typical behaviour is used as a basis for the segmentation.

Detecting whether speech activity is present in a received input signal (step 204), i.e. segmenting, may be based on different detection criteria. For example, a pitch value such as a pitch confidence value may be determined. For this purpose, the microphone signal is fed to a pitch estimation module 111. Here, based on the auto-correlation function of the received input signal (microphone signal), a pitch confidence value, such as a normalised confidence pitch value, may be determined. In order to determine whether speech activity is present, the determined pitch confidence value may be compared to a predetermined threshold value. If the determined pitch confidence value is larger than the predetermined pitch threshold, it is decided that speech input is present. In this case, alternatively, a probability value or a confidence value with respect to whether speech input is present may be determined. These value may then combined with corresponding probability or confidence values stemming from other criteria to obtain an overall detection criterion.

The pitch threshold may be given in a time-varying and/or speaker-dependent way. In particular, in case of a speech prompt output, a pitch threshold may be set to a predefined higher value than in case of no speech prompt being output. Similarly, the predetermined pitch threshold may be set depending on the determined speaker identity.

Alternatively or additionally, in order to detect speech activity, the loudspeaker signal may be fed to pitch estimation module 111. The (estimated) pitch frequency of the speech prompt signal and of the microphone signal are compared. If both pitch frequencies correspond to each other, it is decided that no speech activity is present. On the other hand, if the microphone signal and the loudspeaker signal show different values, speech activity may be considered to be present. Also in this case, no decision need be made at that stage; it is also possible to only determine a corresponding probability or confidence value with regard to the presence of speech input.

Alternatively or additionally, a signal level based segmentation may be performed. In such a case, the signal level of the background noise is estimated in energy detection module 109. Such an estimation usually is performed during speech pauses. An estimation of the noise power density spectrum *Ŝₙₙ(Ω_{µ},k)* is performed in the frequency domain wherein Ω_{µ} denotes the (normalised) centre frequency of the frequency band µ, and k denotes the time index according to a short time Fourier transform. Such an estimation may be performed in accordance with R. Martin "Noise Power Spectral Density Estimation Based on Optimal Smoothing and Minimum Statistics", IEEE Trans. Speech Audio Process., T-SA-9(5), pages 504 - 512 (2001).

In order to detect speech activity, the power spectral density of the microphone signal may be estimated in energy detection module 109 as well. Speech activity is considered to be present, if the power spectral density of the current microphone signal S_{¤}(*Ω_{µ},k*) in the different frequency bands is larger than the determined noise power spectral density times a predetermined factor S_{¤}*(Ω_{µ},k)* > Ŝₙₙ*(Ω_{µ},k)*·β. The factor β, similar to the case of the pitch criterion, may be time-varying. In particular, the factor may be increased in case of a speech prompt output and decreased if no speech prompt output is present. Similar to the criteria discussed above, no decision need be made based on this estimation only; it is also possible to only determine a corresponding probability or confidence value with regard to the presence of speech input.

During the whole process, an echo cancellation may be performed in echo canceller 107. In practice, after starting outputting a speech prompt, converging effects may occur during which the echo cancellation is not yet fully adjusted. In this case, the microphone signal after subtracting the estimated echo signal still contains artefacts of the speech prompt output. In order to avoid misclassification, the segmentation module 106 may be configured to start processing the signals only after a predetermined minimum time has passed after starting to output a speech prompt. For example, segmentation may start one second after output of a speech prompt has started. During this time interval, the input signal is stored in memory, and multiple iterations of the echo canceller may be performed on this data. Thus, the quality of convergence after this initial time interval can be increased, resulting in a reliable adjustment of the adaptive filters.

If the different information sources yield probability or confidence values, the segmentation module 106 may combine these outcomes using a neural network in order to finally decide whether speech input is present or not.

If segmentation module 106 considers speech activity being present, the detected utterance is forwarded to the speech recogniser 104 for speech recognition (step 205). At the same time segmentation module 106 may send a signal to prompter 102 to stop output of a speech prompt.

According to a further aspect, a speech prompt may be modified based on a detected speaker identity. For example, the system may determine, based on the statistical model for a particular speaker, that this speaker always interrupts a particular prompt. In this case, this prompt may be replaced by a shorter version of the prompt or even omitted at all.

Thus, based on different information sources such as presence or absence of a speech prompt output or a detected speaker identity (possibly with a corresponding statistical speaker model), the segmentation sensitivity threshold may be adapted. For adaptation, for example, a factor used for segmentation based on power spectral density estimation or a pitch threshold may be modified accordingly.

## Claims

1. Method for determining barge-in in a speech dialog system, comprising:
determining whether a speech prompt is output by the speech dialog system,
detecting whether speech activity is present in an input signal based on a time-varying sensitivity threshold,
wherein the sensitivity threshold is increased if output of a speech prompt is determined and decreased if no output of a speech prompt is determined.

2. Method according to claim 1, wherein detecting whether speech activity is present is further based on speaker information.

3. Method according to claim 1 or 2, wherein the determining step comprising detecting a speech prompt signal to be output.

4. Method according to one of the preceding claims, wherein the determining step comprises receiving information from a dialog control on whether a speech prompt is output.

5. Method according to one of the preceding claims, further comprising detecting a speaker identity for the input signal.

6. Method according to claim 5, further comprising modifying the sensitivity threshold based on the detected speaker identity.

7. Method according to claim 5 or 6, further comprising modifying a speech prompt based on the detected speaker identity.

8. Method according to one of the preceding claims, wherein the detecting step comprises determining an input signal power density spectrum.

9. Method according to claim 8, wherein speech activity is detected if the input signal power density spectrum is larger than a predetermined noise signal power spectrum times a predetermined factor, in particular,
wherein the predetermined factor is a time-varying factor.

10. Method according to one of the preceding claims, further comprising determining a pitch value for the input signal.

11. Method according to claim 10, wherein the detecting step comprises comparing the determined pitch value with a predetermined pitch threshold.

12. Method according to claim 11, wherein the predetermined pitch threshold is time-varying and/or speaker-dependent.

13. Method according to claim 11 or 12, wherein the predetermined pitch threshold is based on a pitch value of the speech prompt signal.

14. Method according to one of the preceding claims, wherein the detecting step is based on a plurality of information sources for a detection criterion, in particular, on the outcome of the steps of detecting a speaker identity, determining an input signal power density spectrum and/or determining a pitch value for the input signal.

15. Method according to one of the preceding claims, wherein the detecting step is not performed before a predetermined minimum time has passed after starting a speech prompt output.

16. Method according to one of the preceding claims, further comprising performing an echo cancellation on the input signal.

17. Method according to one of the preceding claims, further comprising interrupting or fading out output of a speech prompt if speech activity is detected.

18. Computer program product comprising at least one computer readable medium having computer-executable instructions for performing the steps of the method of one of the preceding claims when run on a computer.

19. Apparatus for determining barge-in in a speech dialog system comprising:
determining means for determining whether a speech prompt is output by the speech dialog system,
a speech activity detector (106) for detecting speech activity in an input signal based on a time-varying sensitivity threshold,
wherein the sensitivity threshold is increased if output of a speech prompt is determined and decreased if no output of a speech prompt is determined.

## Patentansprüche

1. Verfahren zum Feststellen von Barge-In in einem Sprachdialogsystem, wobei das Verfahren umfasst:
Feststellen, ob eine Spracheingabeaufforderung durch das Sprachdialogsystem ausgegeben wird,
Erfassen, ob Sprachaktivität in einem Eingangssignal vorhanden ist, auf Basis eines zeitlich variierenden Empfindlichkeits-Schwellenwertes,
wobei der Empfindlichkeits-Schwellenwert angehoben wird, wenn Ausgabe einer Spracheingabeaufforderung festgestellt wird, und abgesenkt wird, wenn keine Ausgabe einer Spracheingabeaufforderung festgestellt wird.

2. Verfahren nach Anspruch 1, wobei Erfassen, ob Sprachaktivität vorhanden ist, des Weiteren auf Sprecher-Informationen basiert.

3. Verfahren nach Anspruch 1 oder 2, wobei der Schritt des Feststellens umfasst, dass erfasst wird, dass ein Spracheingabeaufforderungs-Signal ausgegeben wird.

4. Verfahren nach einem der vorangehenden Ansprüche, wobei der Schritt des Feststellens Empfangen von Informationen von einer Dialogsteuerung dahingehend umfasst, ob eine Spracheingabeaufforderung ausgegeben wird.

5. Verfahren nach einem der vorangehenden Ansprüche, das des Weiteren Erfassen einer Sprecher-Identität für das Eingangssignal umfasst.

6. Verfahren nach Anspruch 5, das des Weiteren Modifizieren des Empfindlichkeits-Schwellenwertes auf Basis der erfassten Sprecher-Identität umfasst.

7. Verfahren nach Anspruch 5 oder 6, das des Weiteren Modifizieren einer Spracheingabeaufforderung auf Basis der erfassten Sprecher-Identität umfasst.

8. Verfahren nach einem der vorangehenden Ansprüche, wobei der Schritt des Erfassens Feststellen eines Leistungsdichtespektrums des Eingangssignals umfasst.

9. Verfahren nach Anspruch 8, wobei Sprachaktivität erfasst wird, wenn das Leistungsdichtespektrum des Eingangssignals um einen vorgegebenen Faktor größer ist als ein vorgegebenes Leistungsspektrum eines Rauschsignals, wobei insbesondere der vorgegebene Faktor ein zeitlich variierender Faktor ist.

10. Verfahren nach einem der vorangehenden Ansprüche, das des Weiteren Feststellen eines Pitch-Wertes für das Eingangssignal umfasst.

11. Verfahren nach Anspruch 10, wobei der Schritt des Erfassens Vergleichen des festgestellten Pitch-Wertes mit einem vorgegebenen Pitch-Schwellenwert umfasst.

12. Verfahren nach Anspruch 11, wobei der vorgegebene Pitch-Schwellenwert zeitlich variiert und/oder vom Sprecher abhängig ist.

13. Verfahren nach Anspruch 1 oder 12, wobei der vorgegebene Pitch-Schwellenwert auf einem Pitch-Wert des Spracheingabeaufforderungs-Signals basiert.

14. Verfahren nach einem der vorangehenden Ansprüche, wobei der Schritt des Erfassens auf einer Vielzahl von Informationsquellen für ein Erfassungskriterium basiert, insbesondere auf dem Ergebnis der Schritte des Erfassens einer Sprecher-Identität, des Feststellens eines Leistungsdichtespektrums des Eingangssignals und/oder des Feststellens eines Pitch-Wertes für das Eingangssignal.

15. Verfahren nach einem der vorangehenden Ansprüche, wobei der Schritt des Erfassens erst durchgeführt wird, wenn eine vorgegebene minimale Zeit nach dem Beginn einer Spracheingabeaufforderungs-Ausgabe vergangen ist.

16. Verfahren nach einem der vorangehenden Ansprüche, das des Weiteren Durchführen einer Echounterdrückung an dem Eingangssignal umfasst.

17. Verfahren nach einem der vorangehenden Ansprüche, das des Weiteren Unterbrechen oder Ausblenden von Ausgabe einer Spracheingabeaufforderung umfasst, wenn Sprachaktivität erfasst wird.

18. Computerprogrammerzeugnis, das wenigstens ein computerlesbares Medium umfasst, das durch Computer ausführbare Befehle zum Durchführen der Schritte des Verfahrens nach einem der vorangehenden Ansprüche beim Ausführen auf einem Computer aufweist.

19. Vorrichtung zum Feststellen von Barge-In in einem Sprachdialogsystem, wobei die Vorrichtung umfasst:
eine Feststelleinrichtung, mit der festgestellt wird, ob eine Spracheingabeaufforderung durch das Sprachdialogsystem ausgegeben wird,
eine Einrichtung (106) zum Erfassen von Sprachaktivität, mit der Sprachaktivität in einem Eingangssignal auf Basis eines zeitlich variierenden Empfindlichkeits-Schwellenwertes erfasst wird,
wobei der Empfindlichkeits-Schwellenwert angehoben wird, wenn Ausgabe einer Spracheingabeaufforderung festgestellt wird, und abgesenkt wird, wenn keine Ausgabe einer Spracheingabeaufforderung festgestellt wird.

## Revendications

1. Procédé permettant de déterminer une intervention dans un système de dialogue par la parole, comprenant :
la détermination de ce qu'une invitation à la parole est émise en sortie par le système de dialogue par la parole,
la détection de ce qu'une activité de parole est présente dans un signal d'entrée sur la base d'un seuil de sensibilité variant dans le temps,
dans lequel le seuil de sensibilité est augmenté si la sortie de l'invitation à la parole est définie, et diminué si aucune sortie d'invitation à la parole n'est définie.

2. Procédé selon la revendication 1, dans lequel la détection de ce que l'activité de parole est présente est en outre fondée sur des informations sur le locuteur.

3. Procédé selon la revendication 1 ou 2, dans lequel l'étape de détermination comprend la détection d'un signal d'invitation à la parole à émettre en sortie.

4. Procédé selon l'une des revendications précédentes, dans lequel l'étape de détermination comprend la réception d'informations provenant d'une commande de dialogue sur le fait qu'une invitation à la parole est émise en sortie.

5. Procédé selon l'une des revendications précédentes, comprenant en outre la détection de l'identité d'un locuteur pour le signal d'entrée.

6. Procédé selon la revendication 5, comprenant en outre la modification du seuil de sensibilité sur la base de l'identité détectée du locuteur.

7. Procédé selon la revendication 5 ou 6, comprenant en outre la modification d'une invitation à la parole fondée sur l'identité détectée du locuteur.

8. Procédé selon l'une des revendications précédentes, dans lequel l'étape de détection comprend la détermination d'un spectre de densité de puissance du signal d'entrée.

9. Procédé selon la revendication 8, dans lequel l'activité de parole est détectée si le spectre de densité de puissance du signal d'entrée est plus grand qu'un spectre de puissance de signal de bruit prédéterminé multiplié par un facteur prédéfini, en particulier,
dans lequel le facteur prédéfini est un facteur variant dans le temps.

10. Procédé selon l'une des revendications précédentes, comprenant en outre la détermination d'une valeur de hauteur tonale pour le signal d'entrée.

11. Procédé selon la revendication 10, dans lequel l'étape de détection comprend la comparaison de la valeur déterminée de hauteur tonale à un seuil prédéfini de hauteur tonale.

12. Procédé selon la revendication 11, dans lequel le seuil prédéfini de hauteur tonale est variable dans le temps et/ou dépend du locuteur.

13. Procédé selon la revendication 11 ou 12, dans lequel le seuil prédéfini de hauteur tonale est fondé sur une valeur de hauteur tonale du signal d'invitation à la parole.

14. Procédé selon l'une des revendications précédentes, dans lequel l'étape de détection est fondée sur une pluralité de sources d'informations pour un critère de détection, en particulier, sur le résultat des étapes de détection de l'identité d'un locuteur, de détermination d'un spectre de densité de puissance du signal d'entrée et/ou de détermination d'une valeur de hauteur tonale pour le signal d'entrée.

15. Procédé selon l'une des revendications précédentes, dans lequel l'étape de détection n'est pas exécutée avant qu'une durée minimale prédéterminée se soit écoulée après le début d'une sortie d'invitation à la parole.

16. Procédé selon l'une des revendications précédentes, comprenant en outre l'exécution d'une annulation d'écho sur le signal d'entrée.

17. Procédé selon l'une des revendications précédentes, comprenant en outre l'interruption ou la diminution graduelle de la sortie d'une invitation à la parole si une activité de parole est détectée.

18. Programme informatique comprenant au moins un support pouvant être lu par ordinateur comportant des instructions exécutables par ordinateur pour effectuer les étapes du procédé de l'une des revendications précédentes, lorsqu'elles s'exécutent sur un ordinateur.

19. Appareil permettant de déterminer une intervention dans un système de dialogue par la parole, comprenant :
un moyen de détermination permettant de définir si une invitation à la parole est émise en sortie par le système de dialogue par la parole,
un détecteur d'activité de parole (106) permettant de détecter une activité de parole dans un signal d'entrée sur la base d'un seuil de sensibilité variant dans le temps,
dans lequel le seuil de sensibilité augmente si la sortie de l'invitation à la parole est définie, et diminué si aucune sortie d'invitation à la parole n'est définie.
